# EUROPÄISCHE PATENTSCHRIFT

(11) **EP 1 585 650 B1**
(45) Veröffentlichungstag und Bekanntmachung des Hinweises auf die Patenterteilung: **30.12.2009**
(21) Anmeldenummer: 04701564.9
(22) Anmeldetag: 13.01.2004
(51) Int. Cl.: B60R 5/04

(54) **SPANNELEMENT, INSBESONDERE SPANNGURTE, GEPÄCKSPINNE UND AUFFANGNETZ**
SECURING ELEMENT, IN PARTICULAR SECURING STRAPS, OCTOPUS STRAP AND RETAINING NET
ELEMENT DE SERRAGE, NOTAMMENT SANGLE DE SERRAGE, FILET POUR BAGAGES ET FILET DE SECURITE

(30) Priorität: 14.01.2003 CH 502003; 01.12.2003 CH 20402003
(43) Veröffentlichungstag der Anmeldung: 19.10.2005
(73) Patentinhaber: Mammut Tec AG, 6300 Zug (CH)
(72) Erfinder: HESS, Ruedi, CH-5306 Tegerfelden (CH)
(74) Vertreter: Gachnang, Hans Rudolf
(86) Internationale Anmeldenummer: PCT/CH2004/000008
(87) Internationale Veröffentlichungsnummer: WO 2004/063460

(56) Entgegenhaltungen:
- EP-A- 0 102 933
- GB-A- 2 338 472
- US-A- 3 913 178
- US-A- 4 270 657
- US-A- 4 769 875
- US-A- 5 673 464
- US-B1- 6 394 720

## Beschreibung

Die Erfindung betrifft ein Spannelement, insbesondere eine Spanngurte, eine Gepäckspinne und ein Auffangnetz gemäss Patentanspruch 1.

Es gibt heute und seit vielen Jahren im Markt Spannelemente, Gepäckspinnen, die vielfach aus einem elastischen, runden oder ovalen textilen, seilähnlichem Material bestehen, mit einem Kern aus elastischen Fäden, umwickelt oder umflochten von farbigen Garnen. Die Anforderungen an solche Spannelemente sind in der Norm TÜV mit einer Bruchfestigkeit von 540 N (55 kg) leicht, 685 N (70 kg) mittel, 1225 N (125 kg) schwer, Gepäckspinnen 540 N (55 kg) angegeben.
Am Ende dieser abgelängten, seilähnlichen Spannelemente wird jeweils ein Stahl- oder Plastikhaken so angebracht, dass das Ende umgelegt und vernietet, vernagelt, vernäht oder verklebt und dadurch doppelt so dick wird und so der Haken nicht mehr aus dem seilähnlichen, elastischen Spannelement rutschen kann.
Plastikhaken werden teilweise auch direkt an das abgelängte, elastische, seilähnliche Element angespritzt. Diese Enden weisen jeweils am Ende eine unhandliche Dicke auf, da der gedrehte Stahl- oder gespritzte Plastik-Hakenabschluss jeweils 2-3 mal dicker ist als das elastische runde Spannelement. Dies ist bei der Verspannung der elastischen Elemente zur Befestigung des Volumens auf Gepäckträgern von Velos, Mofas durch das einhängen des Hakens, der eine grosse Dicke aufweist, meist mühevoll.

Ebenfalls muss der Kunde die richtige Länge kaufen, da er sonst immer zu lange oder zu kurze Spannelemente hat. Dies ist meist mit Schwierigkeiten verbunden, da das zu befestigende Gut immer wieder eine andere Grösse oder ein anderes Volumen aufweist.

Mehrere Spannelemente müssen manchmal eingesetzt werden, da das Volumen des zu transportierenden Gutes oft zu gross ist für ein oder zwei Spannelemente. Dann werden sogenannte Gepäckspinnen hergestellt, die in einem Plastikring oder einem Plastikteil mehrere der elastischen Spannelemente zusammenhalten.
Häufig ist hier jedoch der Nachteil, dass sich das zu transportierende Volumen nicht aus einem gleichförmigen Körper zusammensetzt, so dass die eine Seite der Gepäckspinne zu lang ist und die andere zu kurz.
Bekannt sind auch Gepäcknetze aus gewirkten, geraschelten, geflochtenen oder gedrehten Seilen und Kordeln, die aber meistens nicht elastisch sind und sich deshalb dem Volumen nicht anpassen können.
Sie haben daher den Nachteil, dass sie meistens noch mit zusätzlichen elastischen Spannelementen kombiniert werden müssen um das Volumen des Transportgutes zu halten. Ebenfalls ist die Reissfestigkeit solcher Netze eher tief, sodass diese bei Belastung schnell einmal reissen.

Nach der US 5,673,464 ist ein Spannelement bekannt, das einen zwischen zwei Enden elastischen Hauptkörper mit einer Vielzahl von Öffnungen aufweist. Diese Öffnungen dehnen sich zwischen den beiden Enden linear aus, sodass sich ein zweiter Hauptkörper durch die ausgedehnten Öffnungen gezogen werden kann.
Nachteilig ist, dass dieses Spannelement zwei definierte Enden mit je einem daran angebrachten Haken und dadurch immer eine bestimmte Länge aufweist, wobei die Haken immer an den Enden fixiert sind. Der Hauptkörper besteht aus zwei parallelen Seiten, die erst bei Zugspannung eine Öffnung für einen zweiten Hauptkörper bilden. Der zweite identische Hauptkörper kann nur durch den ersten Hauptkörper gezogen werden, wenn dieser gedehnt vorliegt und dieser erste Hauptkörper den zweiten Hauptkörper erst dann in Position hält, wenn dieser entspannt wird.

Nach der US 3,913,178 ist ein Spannband bekannt, das eine Vieizahi von Öffnungen aufweist, wobei in jeder dieser Öffnungen eine Zunge angebracht ist, sodass das Spannband durch eine dieser Öffnungen zurückgeschlauft werden kann und dadurch an einer bestimmten Stelle fixiert, bzw. geklemmt wird.
Nachteilig ist, dass dieses Band in den Öffnungen kleine Zungen aufweist, so dass diese bei Rückschlaufung desselben Elementen einen Klemmeffekt haben. Das Band ist deshalb so ausgelegt, dass es in sich selbst anstelle einer Klemmschnalle festklemmt. Dadurch sind keine Haken oder mehrere Elemente als Kombination möglich. Ebenfalls ist die Zugkraft auf die Klemm-Festigkeit der Zungen beschränkt.
Zudem können keine beliebigen Haken zur Befestigung eingesetzt werden.

Es ist die Aufgabe der vorliegenden Erfindung, ein Spannelement vorzuschlagen, bei dem die Nachteile in Bezug auf die erforderliche Länge entfallen.

Erfindungsgemäss wird diese Aufgabe mit einem Spannelement gemäss dem Wortlaut nach Patentanspruch 1 gelöst, indem ein elastisches, seilähnliches Spannelement so vorgeschlagen wird, das sich in einem definierten Raster immer wieder zweiteilt und als Rollenmaterial verfügbar ist.

Die Erfindung wird im Folgenden anhand der Zeichnungen näher erläutert. Es zeigen:
- Fig. 1A: Ansicht eines erfindungsgemässen Spannelementes
- Fig. 1 B: Ansicht eines erfindungsgemässen Spannelementes mit einem zweiten durchgeschlauften Spannelement
- Fig. 2: Spannelement als Gepäckspinne für leichte Lasten
- Fig. 3: Erstes Ausführungsbeispiel eines Spannelementes mit zwei ange- brachten Haken
- Fig. 4: Haken in Ansicht und Seitenansicht
- Fig. 5: Zweites Ausführungsbeispiel mehrerer Spannelemente als Gepäcknetz für schwere Lasten
- Fig. 6: Drittes Ausführungsbeispiel mehrerer Spannelemente als Frachtrück- haltenetz
- Fig. 7: Viertes Ausführungsbeispiel mehrerer Spannelemente als Aufprallnetz
- Fig. 8: Querschnitt eines Spannelementes mit Verstärkung einer Stahllitze

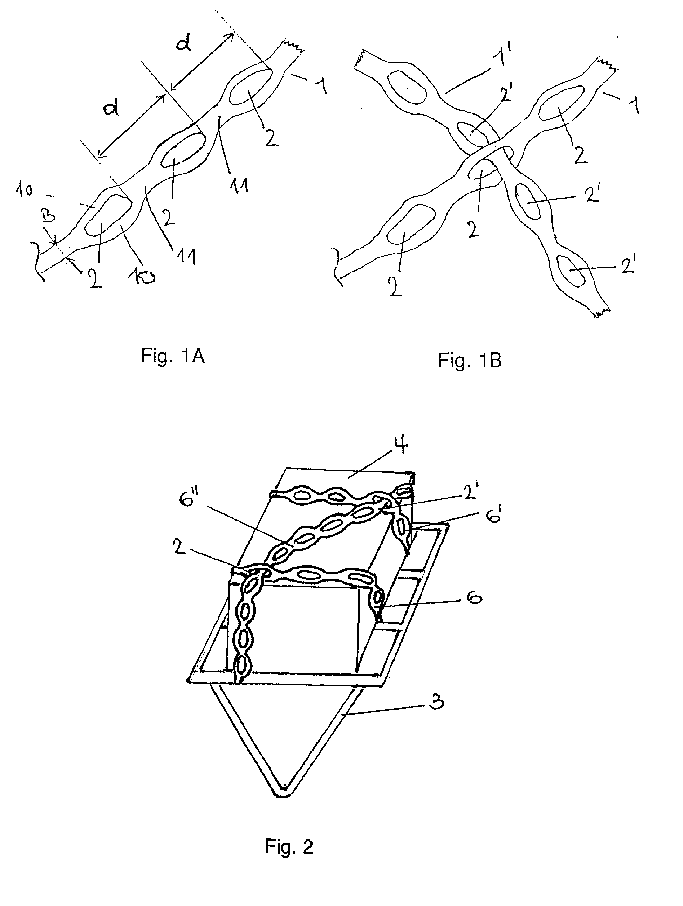

Fig. 1A zeigt die Ansicht eines erfindungsgemässen Spannelementes. Ein seil-, band-, gurten- oder kordelähnliches Gebilde 1, im weiteren als Spannelement bezeichnet, weist eine Vielzahl von Öffnungen 2 auf, die rasterartig angeordnet sind. Die rasterartige Ausbildung ergibt eine Rasterdistanz d, die vom einen Öffnungsrand zum nächsten definiert ist. Die Rasterdistanz ist in der Regel über das gesamte Spannelement hinweg einheitlich, was aber keineswegs zwingend ist. Sie kann z.B. alternierend sein, d.h. einer grösseren folgt eine kleinere, oder aber im Extremfall völlig beliebig sein. Dies kann im Zusammenhang mit unterschiedlichen Öffnungen von Interesse sein, wie später beschrieben wird. Die Öffnungen 2 weisen Seitenelemente 10 und Querelemente 11 auf, wobei die Seitenelemente aus einem elastischen und/oder halbelastischen Material und die Querelemente aus einem unelastischen und/oder halbelastischen Material bestehen. Die Öffnungen 2 führen zu einer Zweiteilung des Spannelementes 1. Sie haben in der Regel eine einheitliche Dimension, was aber keineswegs zwingend ist. Vielmehr kann die Funktionalität durch verschiedene Grössen der Öffnungen weitgehend gesteigert werden. Die Öffnungen sind zur Aufnahme von Befestigungselementen, insbesondere von Haken vorgesehen, wobei durch die Wahl einer bestimmten Öffnung jeweils auch die Länge des Spannelementes sich optimal ergibt. Die Öffnungen werden im Herstellprozess gebildet, indem das Spannelement 1 sich bei der Produktion rasterförmig zweiteilt.
In der Ebene der Öffnungen weist das Spannelement eine Breite B auf, die durch die vorgegebenen Anforderungen an die Festigkeit und durch die Wahl der verwendeten Materialien bestimmt wird. Dies gilt auch für die senkrecht zur Breite gegebene Dicke des Spannelementes. Breite und Dicke können so zufälligerweise gleiche Dimensionen aufweisen, sie sind aber in der Regel unterschiedlich.
Das Spannelement besteht aus Polyurethan, PVC, synthetischem Gummi, natürlichem Gummi, Leder, synthetischem Leder, Vliessstoffen, Garnbündeln, Garnen, synthetischen Garnen, Naturfasern, Hochleistungsfasern, Textilstoffen, Stahlgeweben, Garnlitzen, Stahlgewirken, Stahlfasern, Aluminiumfasern, Textilgeflechten, Textilgeweben oder aus einer Kombination dieser Materialien. Dabei gelangen elastische, halbelastische oder unelastische Materialien in einer beliebigen Kombination zur Verarbeitung.

Das Spannelement kann zur Verstärkung der Schnitt- und Reissfestigkeit z.B. mit Stahllitzen armiert werden. Im weiteren dienen ais schnittfeste Verstärkungen Materialien aus Aramid-, PE-, Stahl-, Aluminium- oder Hochleistungsfasern, wobei sich ein vorzüglicher Schutz zur Sicherung von scharfkantigen Gütern ergibt.
Die Öffnungen dienen zur Befestigung von Waren an Objekten, die irgendwelche hakenähnliche Gebilde aufweisen. Dies kann etwa bei einer Flügelschraube eines Velorades der Fall sein, indem das Spannelement von Flügelschraube zu Flügelschraube über die zu befestigende Ware auf dem Gepäckträger des Velos geführt wird und mittels einer der Öffnungen mit der gewünschten, frei wählbaren Spannkraft in den Flügeln der jeweiligen Flügelschrauben eingehakt wird.

Spannelemente der beschriebenen Art werden endlos gefertigt und sind in der Regel als Rollenmaterial verfügbar, was besonders vorteilhaft ist. Durch einfaches Abschneiden kann die erforderliche Länge von Fall zu Fall erhalten werden.

Das Spannelement kann aber auch Befestigungselemente wie etwa ein Haken oder ein hakenähnliches Gebilde aufweisen, womit das Befestigungselement wahlweise Teil des Spannelementes ist.
Vorteilhafterweise wird durch das Anbringen mindestens eines Hakens das Spannelement in der Länge beliebig wählbar.
Befestigungselemente können im Spannelement aber auch an gewissen Stellen unverrückbar angebracht vorliegen, indem sie z.B. bei der Herstellung direkt als Spritzgussteil an das Spannelement angespritzt werden.

Fig. 1B zeigt eine Ansicht eines erfindungsgemässen Spannelementes mit einem zweiten durchgeschlauften Spannelement.
Ein gleichartiges zweites Spannelement 1' mit Öffnungen 2' liegt durch die Öffnung 2 des Spannelmentes 1 durchgeschlauft vor. Dadurch können die Spannelemente 1, 1' an diesen Stellen gekreuzt werden und bleiben dann ohne zusätzliche Plastikteile oder Plastikringe in der richtigen Position, ohne am Transportgut herunter zu rutschen und um das Transportgut zu halten.

Ein Spannelement 1 mit mindestens einem zweiten ähnlichen, vorzugsweise gleicheartigen Spannelement 1' kann als Spanngurte, als Gepäckspinne, als Gepäcknetz, Sicherheitsnetz, Rückhaltenetz oder ähnlich ausgebildet werden.
So bilden etwa mehrere Spannelemente 1, 1' mit gleichen oder unterschiedlichen Rasterlängen durch mehrmaliges Durchschlaufen durch Öffnungen 2, 2' weiterer Spannelemente ein Netz beliebiger Gestalt in bezug auf die Dimensionen, insbesondere auf die Dimension der Maschenweite.

Die Rasterung und der Durchmesser der Öffnungen 2, 2' können so angeordnet werden, dass nach dem Durchschlaufen das Verschieben der Spannelmente gegeneinander auch ohne Vernähung nicht möglich ist.

Die Reissfestigkeit der Spannelemente ist so ausgelegt, dass die Festigkeit in den Kreuzpunkten die Festigkeit der TÜV-Norm nicht nur des leichten (540 N), des mittleren (685 N) sondern auch des schweren (1225 N) Spannelementes erfüllt. Die Reissfestigkeit der Elemente kann auch so ausgebildet werden, dass es als Gepäcknetz in Auto, Lastwagen, Flugzeugen dienen kann. Ebenfalls kann es als Rückhaltenetz für geologische Absturzsicherung von Steinen, Geröll, Erde und Schnee dienen. Für Lasten ab 10 daN aus einem elastischen und/oder halbelastischen Material und allenfalls halbelastischen und/oder unbelastischen Material für die Querelemente oder einer Kombination dieser Materialien angefertigt, dienen derartige Spannelemente vorzugsweise zur Sicherung von Lasten.

Fig. 2 zeigt ein Spannelement als Gepäckspinne für leichte Lasten. Auf einem Gepäckträger 3 eines Fahrrades wird eine Schachtel 4 mittels einem Spannelement befestigt, das aus 3 Teilen 6, 6' und 6" besteht. Durch die Öffnungen 2, 2' ist der dritte Teil 6" durchgeschlauft worden. Die einzelnen Teile sind an ihren Enden mit Haken (nicht dargestellt) ausgebildet und mittels diesen am Gepäckträger befestigt.
Nachdem die Teile 6, 6' 6" einen vordefinierten Raster aufweisen, muss die Verbindung der Spannelemente einzelnen Teile nicht zwingend an einer Stelle stattfinden sondern kann je nach Volumengrösse durch den Benutzer an der gewünschten Stelle verbunden werden. Dadurch entsteht für den Anwender eine enorme Flexibilität, um das Transportgut an der richtigen Stelle zu sichern.

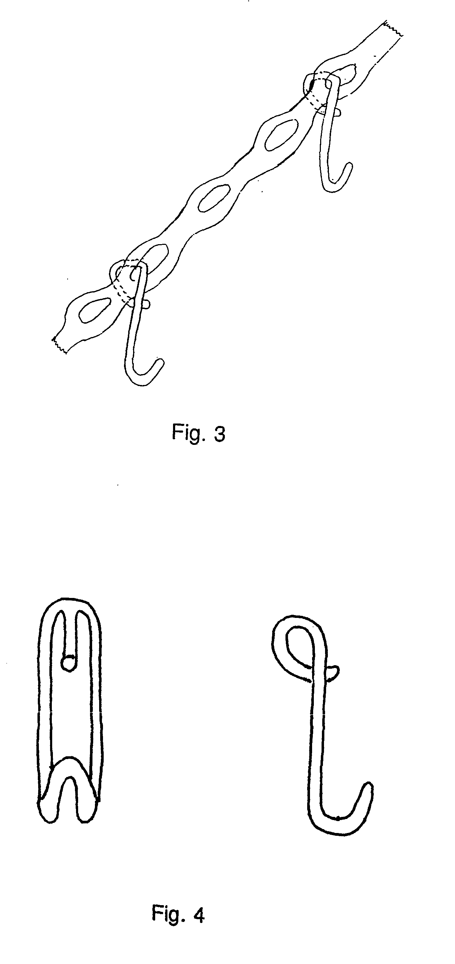

Fig. 3 zeigt ein erstes Ausführungsbeispiel eines Spannelementes mit zwei angebrachten Haken. In den Öffnungen 2, 2' sind Haken 7, 7' angebracht, und zwar jederzeit in eine beliebige Öffnung neu einsetzbar, wodurch eine in Abhängigkeit des vorliegenden Rasters der Öffnungen ideale Länge des Spannelementes erzielbar wird. Der Haken ist besonders anwendungsfreundlich ausgebildet, indem er keine keine 2 bis 3-fache Verdickung aufweist, wodurch das Transportgut leicht befestigt werden kann.
Die einzelnen geteilten Spannelemente können bereits bei der Herstellung zusammengefügt und - für den Anwender zu einer praktischen Gepäckspinne - an den Enden mit Haken versehen werden.

Fig. 4 zeigt einen Haken in Ansicht und Seitenansicht. Der Haken kann als Stanzteil, aus Draht gewunden oder aus Kunststoff gespritzt sein. Er ist so ausgebildet, dass er eingehängt werden kann, ohne dass er aus der Befestigung fällt. Der Haken kann bei entsprechender Spannung des neuen elastischen, geteilten Spannelementes eingehängt und ausgehängt werden. Er kann aber in ungespanntem Zustand nicht herausfallen und verloren gehen.

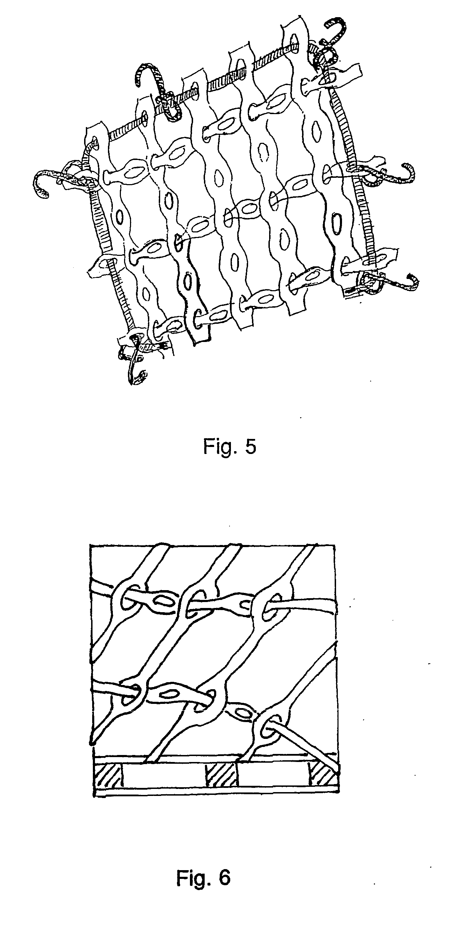

Fig. 5 zeigt ein zweites Ausführungsbeispiel mehrerer Spannelemente als Gepäcknetz für schwere Lasten. Ein derartiges Netz kann in Automobilen, Lastwagen oder Flugzeugen zur Lastensicherung eingesetzt werden. Die einzelnen Elemente werden mit einer Reissfestigkeit so hergestellt, damit die entsprechenden Normen erfüllt werden.

Fig. 6 zeigt ein drittes Ausführungsbeispiel mehrerer Spannelemente als Frachtrückhaltenetz. Ein derartiges Netz kann mit oder ohne Paletten für die Frachtsicherung eingesetzt werden.

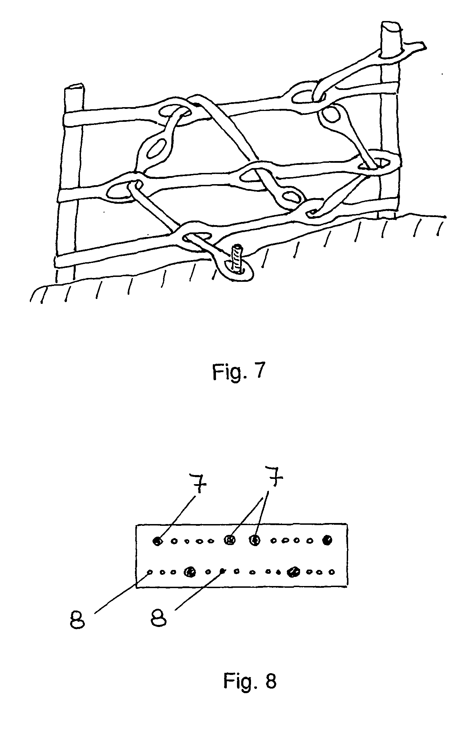

Fig. 7 zeigt ein viertes Ausführungsbeispiel mehrerer Spannelemente als Aufprallnetz. Ein derartiges Netz kann für Steine, Erde, Geröll und andere Materialien als Schutznetz eingesetzt werden.
Falls höhere Anforderungen vorliegen, kann mit einer Schnittschutzverstärkung ein Aufprallnetz erhalten werden, das zur Sicherung bei Sportanlässen, wie Skirennen und Autorennen dient.

Fig. 8 zeigt einen Querschnitt eines Spannelementes mit Verstärkung einer Stahllitze. Diese Armierung weist neben Stahllitzen 7 eine Vielzahl von Hochleistungsfasern 8 auf, wodurch eine Verstärkung des Schnittschutzes erzielt wird.
Diese Verstärkung kann aus Aramid-, PE-, Stahl-, Aluminium oder Hochleistungsfasern bestehen und als Netz ausgebildet zur Sicherung von scharfkantigen Gütern dienen. Verwendungen finden sich bei Steinschlag, Lawinen, Erdmassen, Personen, zur Absturzsicherung, Aufprallsicherung, Absperrungen und Abweisungen irgendwelcher Art.

Der Benutzer kann die einzelnen geteilten, elastischen Spannelemente durch das Durchschlaufen von Spannelementen durch das andere zu einem Netz gestalten. Das Netz wird durch die einzelnen Spannelemente bereits bei der Herstellung gebildet, durch ein weiteres Spannelement eingefasst und mit Haken versehen. Dies ergibt dann ein praktisches, elastisches Gepäcknetz, an dem dieselben Haken auch wieder eingehängt sind.
Dasselbe Netz aus den Gebilden kann auch aus Materialien hergestellt werden, die den Anforderungen und Normen von verschiedenen Transportarten wie Autos, Lastwagen, Flugzeugen, Schiff oder Bahn entsprechen.
Mit dem erfindungsgemässen Spannelement können Lasten überall befestigt werden: Velo, Motorroller, Motorrad, Auto, Caravan, Lastwagen, Flugzeug usw..

## Patentansprüche

1. Spannelement zum Befestigen von Lasten, das in einem Raster aufgeteilt mit Öffnungen (2) seil-, band-, gurten- oder kordelähnlitch ausgebildet ist, wobei die Öffnungen (2) Seitenelemente (10) und Querelemente (11) aufweisen, **dadurch gekennzeichnet dass** die Seitenelemente aus einem elastischen Material und die Querelemente aus einem unelastischen Material bestehen, dass die Öffnungen (2) für die Aufnahme eines Befestigungselementes und für das Durchschlaufen mindestens eines weiteren gleichen oder ähnlichen Spannelementes vorgesehen sind und dass das Soannelement zur Verstärkung der Schnitt- und Reissfestigkeit mit Stahllitzen armiert ist.

2. Spannelement nach Anspruch 1, **dadurch gekennzeichnet, dass** das Befestigungselement ein Haken oder ein hakenähnliches Gebilde ist.

3. Spannelement nach Anspruch 1 oder 2, **dadurch gekennzeichnet, dass** das Befestigungselement wahlweise Teil des Spannelementes ist.

4. Spannelement nach Anspruch 2, **dadurch gekennzeichnet, dass** das Spannelement durch das Anbringen mindestens eines Hakens in der Länge beliebig wählbar ist.

5. Spannelement nach Anspruch 2, **dadurch gekennzeichnet, dass** das Spannelement mindestens einen Haken oder ein hakenähnliches Gebilde aufweist, das als Spritzgussteil angespritzt vorliegt.

6. Spannelement nach Anspruch 1, **dadurch gekennzeichnet, dass** das Querelement (11) eine gleiche oder unterschiedliche Breite und Dicke aufweist.

7. Spannelement nach Anspruch 1, **dadurch gekennzeichnet, dass** es aus Polyurethan, PVC, synthetischem Gummi, natürlichem Gummi, Leder, synthetischem Leder, Vliessstoffen, Garnbündeln, Garnen, synthetischen Garnen, Naturfasern, Hochleistungsfasern, Textilstoffen, Stahlgeweben, Garnlitzen, Stahlgewirken, Stahlfasern, Aluminiumfasern, Textilgeflechten, Textilgeweben oder einer Kombination dieser Materialien besteht.

8. Spannelement nach einem der Ansprüche 1 - 7, **dadurch gekennzeichnet, dass** es eine schnittfeste Verstärkung aus Aramid-, PE-, Stahl-, Aluminium oder Hochleistungsfasern aufweist.

9. Spannelement nach einem der Ansprüche 1 - 7, **dadurch gekennzeichnet, dass** es mit mindestens einem zweiten ähnlichen, vorzugsweise gleichartigen, Spannelement (1') durch Durchschlaufen durch die Öffnungen (2) des ersten Spannelementes eine Gepäckspinne bildet.

10. Spannelement nach einem der Ansprüche 1 - 7, **dadurch gekennzeichnet, dass** mehrere Spannelemente mit gleichen oder unterschiedlichen Rasterlängen durch mehrmaliges Durchschlaufen durch Öffnungen (2) weiterer Spannelemente ein Netz bilden.

11. Spannelement nach Anspruch 9 oder 10, **dadurch gekennzeichnet, dass** die Rasterung der Öffnungen (2, 2') so angeordnet und der Durchmesser der Öffnungen (2, 2') so vorliegt, dass nach dem Durchschlaufen im ungespannten oder gespannten Zustand das Verschieben der Spannelemente gegeneinander im gespannten Zustand auch ohne Vernähung nicht möglich ist.

12. Spannelement nach einem der Ansprüche 1 - 11, **dadurch gekennzeichnet, dass** für Lasten ab 10 daN aus einem elastischen, halbelastischen oder unelastischen Material oder einer Kombination dieser Materialien ausgelegt ist und zur Sicherung von Lasten dient.

13. Spannelement nach einem der Ansprüche 1 - 9, **dadurch gekennzeichnet, dass** es als Lastennetz für Lastwagen oder als Frachtrückhaltenetz in Flugzeugen und Schiffen ausgelegt ist.

14. Spannelement nach einem der Ansprüche 1 - 9, **dadurch gekennzeichnet, dass** es als Auffangnetz ausgebildet ist.

15. Spannelement nach einem der Ansprüche 1 - 9, **dadurch gekennzeichnet, dass** es als Rollenmaterial vorliegt.

## Claims

1. A tightening element for fastening loads, which in a net-like manner with openings (2), is designed in a cable-like, strap-like, belt-like or cord-like manner, wherein the openings (2) comprise side elements (10) and transverse elements (11), **characterised in that** the side elements consist of elastic material and the transverse elements consist of an inelastic material, that the openings (2) are provided for receiving a fastening element or for looping through at least one further equal or similar tightening element, and that the tightening element is reinforced with steel wires for reinforcing the cut-resistance and tear strength.

2. A tightening element according to claim 1, **characterised in that** the fastening element is a hook or a hook-like formation.

3. A tightening element according to claim 1 or 2, **characterised in that** the fastening element is selectively part of the tightening element.

4. A clamping element according to claim 2, **characterised in that that** the tightening element is infinitely selectable in length by way of incorporating at least one hook.

5. A tightening element according to claim 2, **characterised in that** the tightening element comprises at least one hook or hook-like formation, which is present in an integrally injected manner as an injection moulded part.

6. A clamping element according to claim 1, **characterised in that** the transverse element (11) has an equal or different width and thickness.

7. A clamping element according to claim 1, **characterised in that** it consists of polyurethane, PVC, synthetic rubber, natural rubber, leather, synthetic leather, non-woven fabrics, yarn bundles, yarns, synthetic yarns, natural fibres, high-performance fibres, textile materials, steel fabrics, yarn wires, steel knitted fabrics, steel fibres, aluminium fibres, textile meshworks, textile fabrics or a combination of these materials

8. A tightening element according to one of the claims 1 - 7, **characterised in that** it comprises a cutting-resistant reinforcement of aramide fibres, PE fibres, steel fibres, aluminum fibres or high-performance fibres.

9. A tightening element according to one of the claims 7, **characterised in that** with at least one second similar, preferably same-type tightening element, it forms tie-down straps by way of looping through the openings (2) of the first tightening element.

10. A tightening element according to one of the claims 1 to 7, **characterised in that** several tightening elements with the same or different net lengths form a net by way of multiple looping through openings (2) of further tightening elements.

11. A tightening element according to claim 9 or 10, **characterised in that** the pattern of the openings (2, 2') is arranged, and the diameter of the openings (2, 2') is such, that after the looping-through in the non-tightened or tightened condition, the displacement of the tightening elements to one another in the tightened condition is not possible even without sewing.

12. A tightening element according to one of the claims 1 to 11, **characterised in that** it is designed for loads from 10 daN of an elastic, semi-elastic or inelastic material or a combination of these materials, and serves for securing loads.

13. A tightening element according to one of the claims 1 - 9, **characterised in that** it is designed as a load net for lorries or as a freight retaining net in aircraft and ships

14. A tightening element according to one of the claims 1 - 9, **characterised in that** it is designed as a catchment net.

15. A tightening element according to one of the claims 1 - 9, **characterised in that** it is present as a roll material.

## Revendications

1. Elément de serrage pour fixer des charges, lequel est subdivisé en une trame comportant des ouvertures (2) et lequel est réalisé à la manière d'un câble, d'une bande, d'une courroie ou d'une cordelette, dans lequel les ouvertures (2) présentent des éléments latéraux (10) et des éléments transversaux (11), **caractérisé en ce que** les éléments latéraux sont constitués d'un matériau élastique et **en ce que** les éléments transversaux sont constitués d'un matériau non élastique, et **en ce que** les ouvertures (2) sont prévues pour la réception d'un élément de fixation et pour faire passer au moins un autre élément de serrage identique ou semblable et **en ce que** l'élément de serrage est armé avec des torons en acier pour amplifier la résistance à la coupe ou à la rupture.

2. Elément de serrage selon la revendication 1, **caractérisé en ce que** l'élément de fixation est un crochet ou un composant semblable à un crochet.

3. Elément de serrage selon l'une ou l'autre des revendications 1 et 2, **caractérisé en ce que** l'élément de fixation est au choix une partie de l'élément de serrage.

4. Elément de serrage selon la revendication 2, **caractérisé en ce que** l'élément de serrage peut être choisi de manière quelconque dans la longueur suite au montage d'au moins un crochet.

5. Elément de serrage selon la revendication 2, **caractérisé en ce que** l'élément de serrage présente au moins un crochet ou un composant semblable à un crochet, lequel est présent comme pièce en fonte moulée sous injection et injectée.

6. Elément de serrage selon la revendication 1, **caractérisé en ce que** l'élément transversal (11) présente une largeur et une épaisseur identiques ou différentes.

7. Elément de serrage selon la revendication 1, **caractérisé en ce qu'**il est constitué de polyuréthane, de PVC, de caoutchouc synthétique, de caoutchouc naturel, de cuir, de cuir synthétique, d'étoffes de non tissé, de duites, de fils, de fils synthétiques, de fibres naturelles, de fibres à haute performance, d'étoffes textiles, de treillis en acier, de torons de fils, de maillages en acier, de fibres en acier, de fibres en aluminium, de tresses textiles ou d'une combinaison de ces matériaux.

8. Elément de serrage selon l'une des revendications 1 à 7, **caractérisé en ce qu'**il présente un renforcement résistant à la coupure en fibres d'aramide, de PE, d'acier, d'aluminium ou de haute performance.

9. Elément de serrage selon l'une des revendications 1 à 7, **caractérisé en ce qu'**il forme un tendeur pieuvre pour bagages, conjointement avec au moins un second élément de serrage (1') semblable, de préférence identique, en le faisant passer à travers les ouvertures (2) du premier élément de serrage.

10. Elément de serrage selon l'une des revendications 1 à 7, **caractérisé en ce que** plusieurs éléments de serrage comportant des longueurs de trame identiques ou différentes forment un filet suite aux plusieurs passages à travers les ouvertures (2) des autres éléments de serrage.

11. Elément de serrage selon l'une ou l'autre des revendications 9 et 10, **caractérisé en ce que** le quadrillage des ouvertures (2, 2') est agencé et que le diamètre des ouvertures (2, 2') est existant de telle sorte que, après le passage dans l'état détendu ou tendu, le déplacement des éléments de serrage l'un contre l'autre dans l'état tendu n'est pas possible, même sans fermeture par couture.

12. Elément de serrage selon l'une des revendications 1 à 11, **caractérisé en ce qu'**il est conçu pour des charges à partir de 10 daN et **en ce qu'**il est fabriqué depuis un matériau élastique, semi élastique ou non élastique ou depuis une combinaison de ces matériaux et **en ce qu'**il sert à la sécurisation des charges.

13. Elément de serrage selon l'une des revendications 1 à 9, **caractérisé en ce qu'**il est conçu comme filet de charges pour des camions ou comme filet de retenue de fret dans des avions et des bateaux.

14. Elément de serrage selon l'une des revendications 1 à 9, **caractérisé en ce qu'**il est réalisé comme filet de captage.

15. Elément de serrage selon l'une des revendications 1 à 9, **caractérisé en ce qu'**il est réalisé comme matériau en rouleaux.
